# EUROPÄISCHE PATENTSCHRIFT

(11) **EP 3 440 445 B1**
(45) Veröffentlichungstag und Bekanntmachung des Hinweises auf die Patenterteilung: **30.09.2020**
(21) Anmeldenummer: 17709017.2
(22) Anmeldetag: 24.02.2017
(51) Int. Cl.: G01L 3/10

(54) **DREHMOMENTERFASSUNGSEINRICHTUNG UND FAHRZEUG**
TORQUE-SENSING DEVICE AND VEHICLE
DISPOSITIF DE DÉTECTION DE COUPLE ET VÉHICULE

(30) Priorität: 07.04.2016 DE 102016205784
(43) Veröffentlichungstag der Anmeldung: 13.02.2019
(73) Patentinhaber: Robert Bosch GmbH, 70442 Stuttgart (DE)
(72) Erfinder: DOELLING, Rolando, 72379 Hechingen (DE)
(86) Internationale Anmeldenummer: PCT/EP2017/054270
(87) Internationale Veröffentlichungsnummer: WO 2017/174259

(56) Entgegenhaltungen:
- WO-A1-2012/152517
- WO-A1-2014/166655
- WO-A1-2015/132123
- DE-A1- 3 508 337
- DE-A1- 3 518 161
- DE-A1-102006 017 727
- DE-B- 1 220 634
- JP-A- S5 999 228
- JP-A- S61 258 132
- US-A- 4 979 399

## Beschreibung

### Stand der Technik

Die vorliegende Erfindung betrifft eine Drehmomenterfassungseinrichtung und ein Fahrzeug. Die vorliegende Erfindung betrifft insbesondere eine Drehmomenterfassungseinrichtung zur aktiven Erfassung eines auf eine Welle und insbesondere auf eine Kurbelwelle eines mit Muskelkraft und/oder mit Motorkraft antreibbaren Fahrzeuges entlang einer Rotationsachse wirkenden Drehmomentes und ein mit Muskelkraft und/oder mit Motorkraft antreibbares Fahrzeug, ein Fahrrad, Elektrofahrrad, ein eBike, ein Pedelec oder dergleichen.

Bei der Überwachung und/oder Steuerung von Antriebseinrichtungen, zum Beispiel im Bereich der Fahrzeugtechnik, ist es oft wünschenswert, das auf eine Welle einer Antriebseinheit wirkende Drehmoment zu erfassen.

Dazu werden herkömmlicherweise Drehmomenterfassungseinrichtungen eingesetzt, die mit den mechanischen Verspannungen in der Welle im Zusammenhang stehende Effekte ausnutzen, um so auf den Wert eines auf die Achse wirkenden Drehmomentes schließen zu können. Dabei können Materialien eingesetzt werden, die einen von den mechanischen Belastungen abhängigen piezoelektrischen Effekt oder einen inversen magnetostriktiven Effekt zeigen. Der Wert des Drehmoments steht dabei jeweils im Zusammenhang z.B. mit einer passiv abgreifbaren elektrischen Spannung oder mit einem messbaren magnetischen Feld und deren Änderungen.

Nachteilig ist dabei, dass einerseits ausschließlich auf die elektrischen oder magnetischen Größen zurückgegriffen wird, die das mit dem Drehmoment beaufschlagte Material selbst bereitstellt. Andererseits ist ein derartiges Vorgehen auf Grund von Störeinflüssen im thermischen Bereich, zum Beispiel im Sinne einer Temperaturdrift, oder im mechanischen Bereich, z.B. im Sinne von auftretenden Vibrationen oder Verformungen der Antriebskomponenten, mit entsprechenden Messfehlern behaftet. Diese Messfehler bleiben oft unentdeckt und können zu Fehlinterpretationen bei der Bewertung der erfassten Werte des vermeintlich auftretenden Drehmomentes führen.

Aus der Schrift DE 10 2006 017 727 A1 ist eine berührungslose Sensorvorrichtung zur Bestimmung von Eigenschaften einer Welle bekannt. Bei dieser Sensorvorrichtung ist eine Erregerspule vorgesehen, welche mit symmetrisch zur Erregerspule angeordneten Sensorspulen zusammenwirkt. Dabei sind die Erregerspule und zwei Sensorspulen in Ecken eines gleichschenkligen Dreiecks so bezüglich der Welle angeordnet, dass eine Erfassung von Drehmoment und Drehzahl oder Drehmoment und axialer Position der Welle durchführbar ist.

Aus der Schrift WO 2012/152517 A1 ist ein magnetoelastischer Drehmomentsensor vorgesehen, der eine Sendespule zum Generieren eines Magnetfelds in einem Objekt aufweist, dessen Drehmoment ermittelt werden soll. Bei dieser Vorrichtung ist eine Sendespule zur Induzierung eines Magnetfelds in dem Objekt und zwei Empfangsspulen zum Empfangen des durch das Magnetfeld der Senderspule in dem Objekt induziertes Antwortsignals. Eine ähnliche Vorrichtung ist aus der WO 2015/132123 A1 bekannt.

Weitere Sensorvorrichtungen, die mittels der Aufprägung eines Magnetfelds auf eine Welle Eigenschaften der Welle wie beispielsweise das Drehmoment oder die Drehzahl erfassen, sind aus den Schriften JP S61 258132 A, DE 35 08 337 A1, DE 35 18 161 A1, US 4 979 399 A und JP S59 99228 A bekannt.

### Offenbarung der Erfindung

Die erfindungsgemäße Drehmomenterfassungseinrichtung mit den Merkmalen des unabhängigen Anspruches 1 weist demgegenüber den Vorteil auf, dass ohne besondere materielle Vorkehrungen im Bereich der zu untersuchenden Welle auf die Welle einwirkende Drehmomente mit einem hohem Maß an Zuverlässigkeit und Genauigkeit ermittelt werden können. Dies wird erfindungsgemäß mit den Merkmalen des unabhängigen Anspruches 1 dadurch erreicht, dass eine Drehmomenterfassungseinrichtung zur aktiven Erfassung eines auf eine ruhende oder drehende Welle und insbesondere auf eine ruhende oder drehende Kurbelwelle eines mit Muskelkraft und/oder oder mit Motorkraft antreibbaren Fahrzeuges entlang einer Rotationsachse X wirkenden Drehmomentes geschaffen wird mit einer Erregereinheit, welche zur Beaufschlagung der Welle mit einem zeitlich veränderlichen Magnetfeld ausgebildet ist, und einer ersten Sensoreinheit und einer zweiten Sensoreinheit, welche zur Erfassung eines von der Welle getragenen Magnetfeldes ausgebildet sind, wobei die erste und die zweite Sensoreinheit - insbesondere bei ansonsten gleichem Aufbau - in Bezug aufeinander verschiedene Orientierungen aufweisen, so dass sie im Betrieb in Bezug auf die Welle und insbesondere in Bezug auf die Rotationsachse X voneinander verschieden orientiert sind. Durch die erfindungsgemäßen Maßnahmen und insbesondere durch die voneinander abweichenden Orientierungen der ersten und zweiten Sensoreinheiten erfassen diese ein von der Welle getragenes Magnetfeld, welches durch die Erregereinheit durch Beaufschlagung mit einem zeitlich veränderlichen Magnetfeld und insbesondere mit einem magnetischen Wechselfeld angeregt wird, in unterschiedlicher Art und Weise. Durch eine entsprechende Auswertung, zum Beispiel eine Differenzbildung der erfassten Signale, können dann die von der Drehmomentbeaufschlagung stammenden Effekte im Sinne der Signalkomponenten im erfassten Magnetfeld, die orientierungsabhängig sind, isoliert betrachtet werden von den Signalkomponenten der ersten und zweiten Sensoreinheit, die von Störeinflüssen herrühren, welche von der Orientierung der Sensoreinheiten unabhängig oder stärker unabhängig sind als die mit dem beaufschlagten Drehmoment im Zusammenhang stehenden Signalkomponenten.

In der Praxis bedeutet dies, dass beide Sensoreinheiten dieselbe mit einem Drehmoment beaufschlagte Welle vermessen, jedoch mit unterschiedlicher Orientierung. Dabei kann eine Sensoreinheit so eingerichtet sein, dass sie das mit der Drehmomentbeaufschlagung im Zusammenhang stehende Magnetfeld mit besonders hoher Empfindlichkeit erfasst, wogegen die zweite Sensoreinheit quasi als Kompensationssensor dient und mit einer Orientierung ausgerichtet wird, die zwar die Störeinflüsse unverändert erfasst, von den von der Drehmomentbeaufschlagung stammenden Effekten aber vergleichsweise gering beeinflusst wird.

Im Idealfall ist die gegenseitige Orientierung der Sensoreinheiten so ausgebildet, dass eine Sensoreinheit nur die Störungen und die andere Sensoreinheit das dem Drehmoment zu Grunde liegende Signal samt Störung erfasst, so dass aus der - ggf. gewichteten - Differenz der Signale das Drehmoment besonders genau ermittelbar ist. Dabei ist eine gegenseitige Verdrehung von 45° besonders vorteilhaft.

Es werden erfindungsgemäß insbesondere Störungen eliminiert, die im Zusammenhang stehen mit externen Magnetfeldern, z.B. dem Erdfeld und/oder dem Umfeld, der Drehung der Welle, z.B. auf Grund der nicht idealen Wellengeometrie, Vibrationen, Temperaturänderungen und dergleichen.

Die Unteransprüche zeigen bevorzugte Weiterbildungen der Erfindung.

Ein hohes Maß an Unabhängigkeit der beiden Sensoreinheiten stellt sich ein, wenn gemäß einer Weiterbildung der erfindungsgemäßen Drehmomenterfassungseinrichtung jede Sensoreinheit für sich durch die Erregereinheit mit einem eigenen Erreger zur Erzeugung des zu beaufschlagenden Magnetfeldes ausgebildet ist. Zur besseren Vergleichbarkeit können die eigenen Erreger jeweils identisch ausgebildet sein.

Jedoch lassen sich der apparative Messaufwand und systematische Abweichungen besonders gering halten, wenn für die Sensoreinheiten ein gemeinsamer Erreger vorgesehen wird.

In jedem Fall kann ein jeweiliger Erreger mit oder aus einer Magnetspule und gegebenenfalls jeweils einem Kern zur Verstärkung des erregenden Magnetfeldes ausgebildet sein.

Grundsätzlich sind sämtliche Arten von Sensoreinheiten einsetzbar, die auf der Grundlage des einen oder anderen physikalischen Effektes in der Lage sind, eine magnetische Flussdichte zu detektieren.

Ein besonders hohes Maß an messtechnischer Gestaltungsvielfalt ergibt sich jedoch dann, wenn gemäß einer bevorzugten Ausführungsform der erfindungsgemäßen Drehmomenterfassungseinrichtung eine jeweilige Sensoreinheit eine oder mehrere Empfangsspulen aufweist, insbesondere vier Empfangsspulen und/oder jeweils mit einem Kern. Vorzugsweise sind die Empfangsspulen und/oder die Kerne identisch.

Die Messgenauigkeit lässt sich bei der Drehmomenterfassungseinrichtung steigern, indem gemäß einer vorteilhaften Weiterbildung die Empfangsspulen einer jeweilige Sensoreinheit nach Art einer Brückenschaltung verschaltet sind, insbesondere in Form einer Wheatstoneschen und/oder Induktivitätsresonanzmessbrücke und/oder mit zu einer jeweiligen Empfangsspule in Reihe geschaltetem Abstimmwiderstand und/oder parallel geschaltetem Abstimmkondensator.

Dabei können die Elemente zum Abstimmen, nämlich ein jeweiliger Abstimmwiderstand und/oder ein jeweiliger Abstimmkondensator so gewählt werden, indem sie zum Beispiel auf variierbar ausgebildet werden, dass ein erfasster Messerwert in einer bestimmten Situation, zum Beispiel in einem an sich lastfreien Zustand ohne von außen einwirkendes Drehmoment, ein verschwindendes Detektionssignal vorliegt.

Ein besonders hohes Maß an Reproduzierbarkeit, Empfindlichkeit und Genauigkeit stellt sich dann ein, wenn eine jeweilige Sensoreinheit in Bezug auf die zu untersuchende Welle und deren Drehachse ein hohes Maß an Symmetrie besitzt.

So ist es gemäß einer erfindungsgemäßen Drehmomenterfassungseinrichtung vorgesehen, dass die Empfangsspulen einer Sensoreinheit, insbesondere mit Ihren Spulenachsen, an den Endpunkten oder im Bereich der Endpunkte eines Kreuzes angeordnet sind, vorzugsweise eines senkrechten Kreuzes, eines Kreuzes mit gleich langen Seiten und/oder mit einem Erreger im Bereich des Kreuzungspunktes.

Einerseits können die Sensoreinheiten aufeinander abgestimmt und auch unabhängig voneinander gewartet werden, wenn gemäß einer weiteren Alternative der erfindungsgemäßen Drehmomenterfassungseinrichtung die Sensoreinheiten räumlich und/oder baulich separiert oder separat ausgebildet sind oder werden.

Es lassen sich jedoch besonders kompakte Bauformen mit einem gesteigerten Maß an reproduzierbaren Ergebnissen erreichen, wenn gemäß einer anderen vorteilhaften Weiterbildung der erfindungsgemäßen Drehmomenterfassungseinrichtung die Sensoreinheit miteinander integriert, überlappend, verschränkt und/oder in einer gemeinsamen baulichen Einheit ausgebildet sind oder werden.

Dabei kann es insbesondere vorgesehen sein, dass die jeweiligen Sensoreinheiten mit einer konzentrischen Anordnung ihrer gegebenenfalls vorgesehenen Kreuzungspunkte angeordnet sind, wobei insbesondere im Bereich des gemeinsamen Kreuzungspunktes oder der überlappenden Kreuzungspunkte auch ein gemeinsamer Erreger ausgebildet ist.

Es ist denkbar, dass die Komponenten der Sensoreinheiten sowie der Erregereinheit als diskrete Bauteile ausbildet sind oder werden, zum Beispiel in Form gewickelter Spulen oder dergleichen.

Ein besonders hohes Maß an Kompaktheit lässt sich jedoch mit einer anderen vorteilhaften Weiterbildung der erfindungsgemäßen Drehmomenterfassungseinrichtung dadurch erreichen, dass eine jeweilige Sensoreinheit, insbesondere eine jeweilige Empfangsspule, und/oder ein jeweiliger Erreger, insbesondere eine jeweilige Magnetspule, zumindest teilweise als Struktur einer Platine oder Leiterplatte oder einer Mehrzahl davon ausgebildet ist oder wird.

Um die von den Sensoreinheiten bereitgestellten Werte und Signale in sinnvoller Art und Weise nutzen zu können, ist bei einer Weiterbildung der erfindungsgemäßen Drehmomenterfassungseinrichtung diese mit einer Auswerte- und Steuereinheit ausgebildet, welche eingerichtet ist, von den Sensoreinheiten ausgegebene für die erfassten Magnetfelder repräsentative Werte zu empfangen und auf der Grundlage der empfangenen Werte den Wert eines auf die Welle wirkenden Drehmomentes zu bestimmen.

Im Hinblick auf die Steigerung der Bewertungsgenauigkeit kann es dabei vorgesehen sein, dass die Auswerte- und Steuereinheit eingerichtet ist, eine gewichtete Differenz der von der ersten Sensoreinheit empfangenen Werte zu den von der zweiten Sensoreinheit empfangenen Werten zu Grunde zu legen.

Ein Kernaspekt der vorliegenden Erfindung fußt also unter anderem auf dem Umstand, dass durch ein extern auf eine Welle aufgebrachtes Drehmoment der mechanische Zustand der Welle im Sinne der Verteilung mechanischer Spannungen im Volumen und an der Oberfläche der Welle derart geändert wird, dass dies nach außen hin durch eine sich ändernde Wechselwirkung auf ein von außen aktiv eingestrahltes und sich zeitlich änderndes magnetisches Feld detektierbar ist. Dabei kommen insbesondere Oberflächen- und/oder Oberflächentorsionswellen, die durch die Drehmomentbelastung in der Welle erzeugt werden, zum Tragen.

Ferner betrifft die vorliegende Erfindung im Sinne einer Anwendung auch ein mit Muskelkraft und/oder oder mit Motorkraft antreibbares Fahrzeug, insbesondere Fahrrad, Elektrofahrrad, eBike, Pedelec oder dergleichen, mit mindestens einem Rad, einem Antrieb zum Antreiben des mindestens einen Rades und einer erfindungsgemäßen Drehmomenterfassungseinrichtung zur Erfassung eines auf eine Welle des Antriebes wirkenden Drehmomentes, bei welchem auf der Grundlage des erfassten Drehmomentes der Antrieb überwachbar und/oder steuerbar ist.

### Kurzbeschreibung der Figuren

Unter Bezugnahme auf die beigefügten Figuren werden Ausführungsformen der Erfindung im Detail beschrieben.
- Figuren 1 bis 5: zeigen in schematischen Ansichten von verschiedenen Seite eine Ausführungsform der erfindungsgemäßen Drehmomenterfassungseinrichtung mit voneinander räumlich separierten Sensoreinheiten.
- Figuren 6 bis 8: zeigen in schematischen Ansichten von verschiedenen Seiten eine andere Ausführungsform der erfindungsgemäßen Drehmomenterfassungseinrichtung, bei welcher die verwendeten Sensoreinheiten miteinander integriert ausgebildet sind.
- Figuren 9 und 10: zeigen in perspektivischer Ansicht Details einer Sensoreinheit mit kreuzförmig angeordneten Empfangsspulen und einer dabei integrierten Magnetspule einer zu Grunde liegenden Erregereinheit.
- Figuren 11 bis 13: zeigen in schematischer Draufsicht verschiedene Orientierungen einer Sensoreinheit in Bezug auf eine zu vermessende und mit einem Drehmoment beaufschlagbare Welle.
- Figur 14: zeigt in schematischer Form ein Schaltdiagramm eines Aufbaus einer Sensoreinheit, die bei einer Ausführungsform der erfindungsgemäßen Drehmomenterfassungseinrichtung eingesetzt werden kann.
- Figuren 15 bis 18: zeigen in perspektivische Ansichten verschiedene Details einer Ausführungsform der erfindungsgemäßen Drehmomenterfassungseinrichtung mit voneinander separat ausgebildeten Sensoreinheiten aus diskreten Bauteilen.
- Figuren 19 bis 22: zeigen in verschiedenen perspektivischen Ansichten und einer Draufsicht eine Ausführungsform der erfindungsgemäßen Drehmomenterfassungseinrichtung mit miteinander in Platinenform integrierten Sensoreinheiten.
- Figuren 23 und 24: zeigen in schematischer Form Ersatzschaltbilder zu Sensoreinheiten, die als Messsensor beziehungsweise als Kompensationssensor bei einer Ausführungsform der erfindungsgemäßen Drehmomenterfassungseinrichtung zum Einsatz kommen können.
- Figur 25: zeigt nach Art eines Blockdiagramms das bei einer Ausführungsform der erfindungsgemäßen Drehmomenterfassungseinrichtung zu Grunde liegende Auswerteschema.
- Figur 26: zeigt in schematischer Seitenansicht eine Ausführungsform eines erfindungsgemäßen Fahrzeuges nach Art eines Elektrofahrrads unter Verwendung einer Ausführungsform der erfindungsgemäßen Drehmomenterfassungseinrichtung.

### Bevorzugte Ausführungsformen der Erfindung

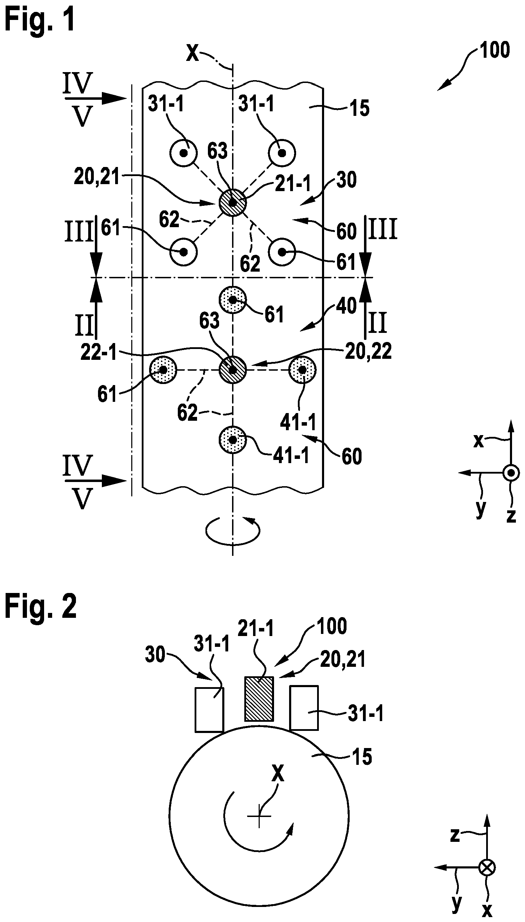

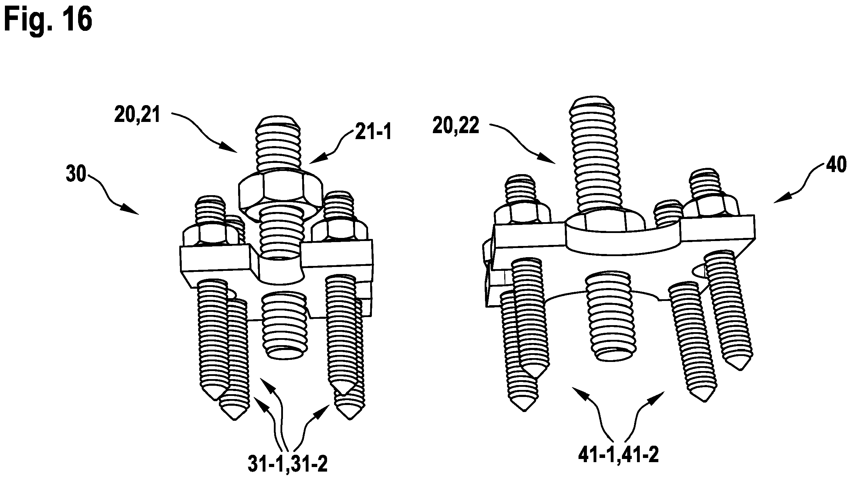

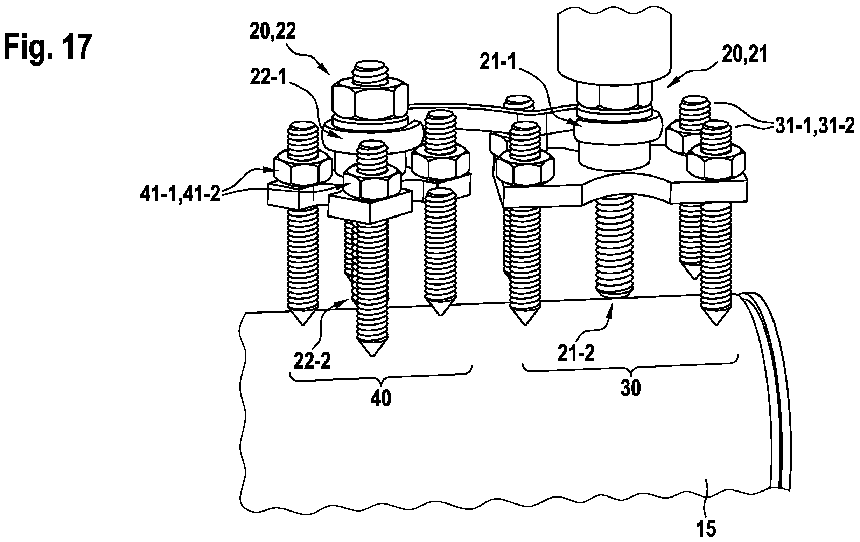

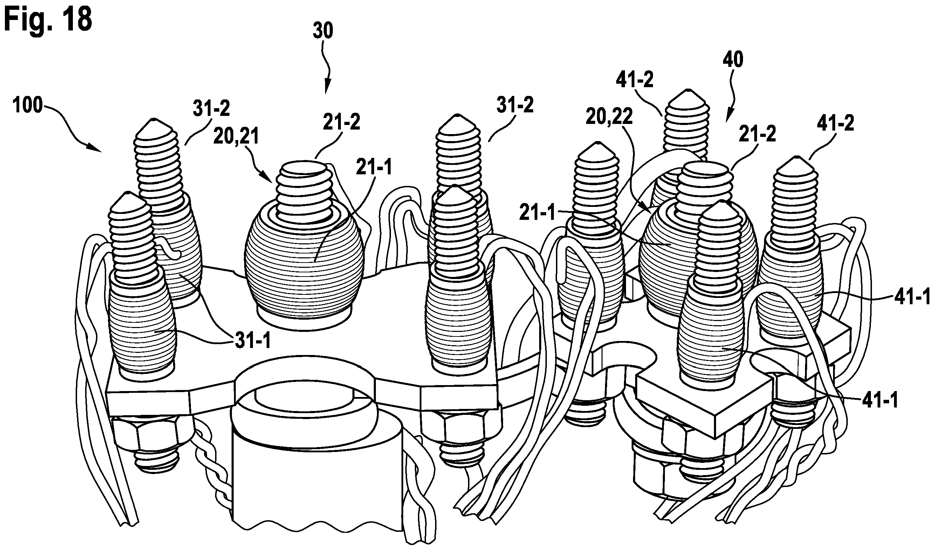

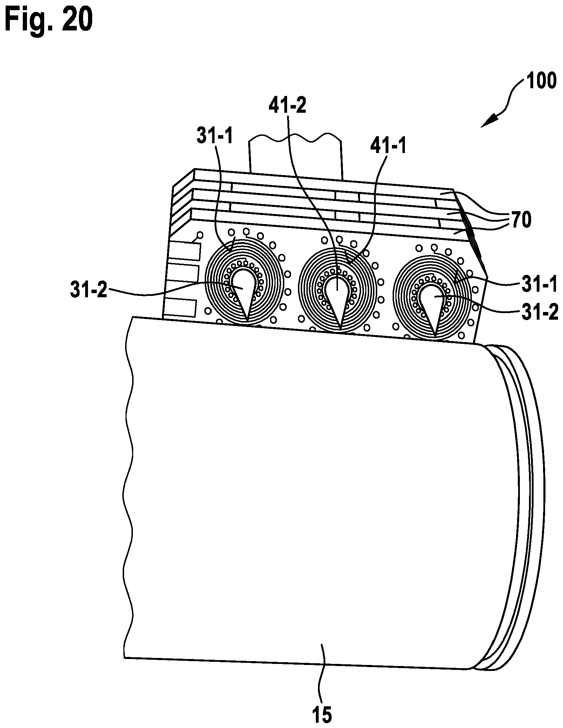

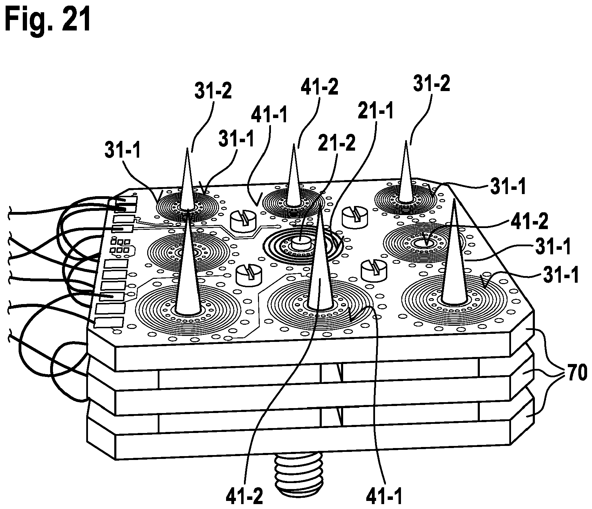

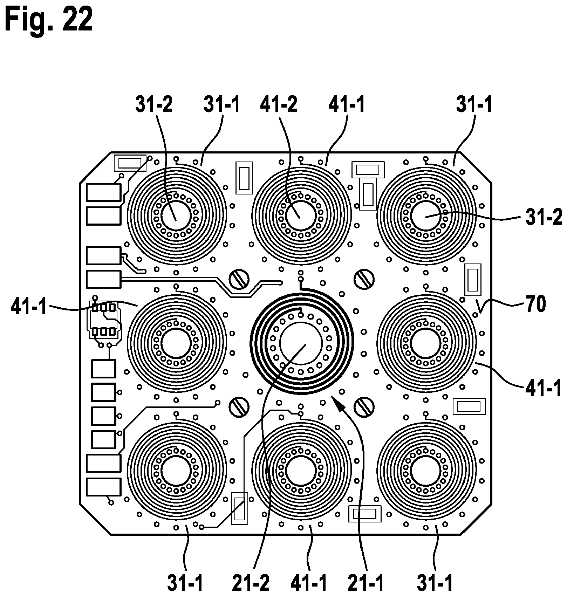

Nachfolgend werden unter Bezugnahme auf die Figuren 1A bis 26 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

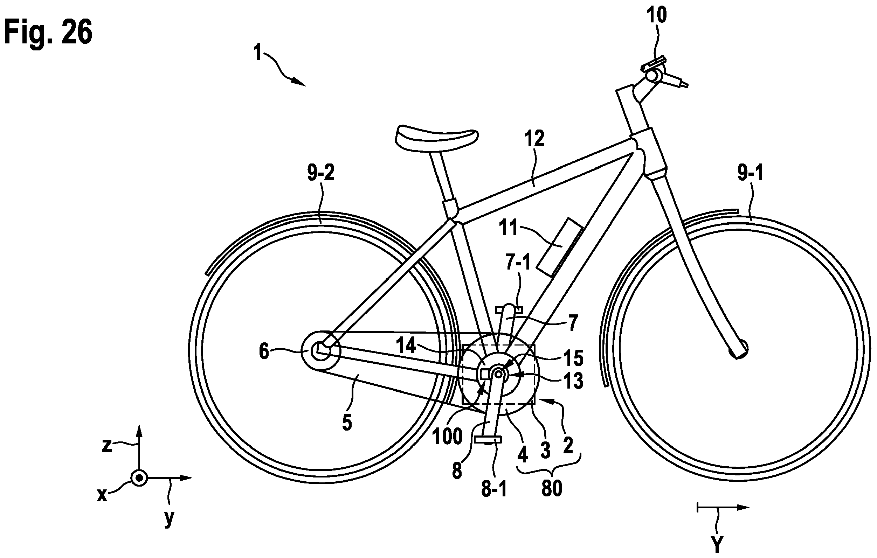

Zunächst wird unter Bezugnahme auf Figur 26 beispielhaft ein Elektrofahrrad als eine bevorzugte Ausführungsform des erfindungsgemäßen Fahrzeuges 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Der Antrieb 80 des erfindungsgemäßen Fahrzeuges 1 umfasst insgesamt also den Kurbeltrieb 2 zur Betätigung durch den Fahrer mittels Muskelkraft und den zusätzlichen oder alternativen elektrischen Antrieb 3.

Im Bereich des Antriebes 80 ist auch eine Ausführungsform der erfindungsgemäßen Drehmomenterfassungseinrichtung 100 ausgebildet, um die Belastung durch ein Drehmoment auf die Kurbelwelle 15 zu detektieren.

Anhand des in Figur 26 dargestellten Dreibeines wird deutlich, dass das Fahrzeug sich mit seiner Längserstreckungsrichtung Y parallel zur y-Richtung erstreckt, wogegen die Quererstreckungsrichtung parallel zur x-Richtung verläuft und mit der Richtung der Achse X der Kurbelwelle 15 übereinstimmt.

Die Figuren 1 bis 5 zeigen verschiedene Ansichten einer Ausführungsform der erfindungsgemäßen Drehmomenterfassungseinrichtung 100.

Die Grundstruktur der Drehmomenterfassungseinrichtung 100 ist am besten aus der Draufsicht gemäß Figur 1 erkennbar. Dort ist die Kurbelwelle 15 als mit einem Drehmoment beaufschlagbare Welle, die es zu überwachen gilt, dargestellt. Die Kurbelwelle 15 ist in der x-Richtung ausgerichtet und um eine Achse X parallel zur x-Richtung drehbar gelagert, wie dies auch im Zusammenhang mit Figur 26 für das erfindungsgemäße Fahrzeug 1 dargestellt ist.

Die in Figur 1 dargestellte Ausführungsform der erfindungsgemäßen Drehmomenterfassungseinrichtung 100 besteht aus einer ersten Sensoreinheit 30 und einer zweiten Sensoreinheit 40.

Die erste Sensoreinheit 30 dient als Messsensoreinrichtung und weist vier Empfangsspulen 31-1 auf, die an den Endpunkten 61 eines senkrechten und mit gleich langen Seiten 62 versehenen Kreuzes 60 angeordnet sind. Im Zentrum des Kreuzes 60, also dem Kreuzungspunkt 63, befindet sich ein Erreger 21 in Form einer Magnetspule 21-1 als Teil einer Erregereinheit 20.

Die erste Sensoreinheit 30 als Messsensoreinrichtung ist mit ihrem Ausrichtungskreuz 60 so orientiert, dass die Drehachse X in Projektion einen Winkel von 45 Grad mit den Seiten 62 des Ausrichtungskreuzes 60 der ersten Sensoreinheit 30 einschließt. Auf diese Art und Weise kann das von der Welle 15 durch Erregung mittels der Erregereinheit 20 erregte und getragene Magnetfeld besonders genau erfasst werden.

Zusätzlich zur ersten Sensoreinheit 30 ist eine zweite Sensoreinheit 40 vom gleichen Aufbau wie der ersten Sensoreinheit 30 aber mit anderer Orientierung separat zur ersten Sensoreinheit 30 und leicht zu dieser räumlich beabstandet ausgebildet. Sowohl der Kreuzungspunkt 63 des Anordnungskreuzes 60 der ersten Sensoreinheit 30 als auch der Kreuzungspunkt 63 des Anordnungskreuzes 60 der zweiten Sensoreinheit 40 liegen in Projektion auf der Drehachse X der Welle 15 und auf einer Achse, die parallel zur Drehachse X der Kurbelwelle 15 verläuft..

Im Gegensatz zum Anordnungskreuz 60 der ersten Sensoreinheit 30 stehen jedoch das erste Paar Seiten 62 des Anordnungskreuzes 60 der zweiten Sensoreinheit 40 in Projektion senkrecht auf der Drehachse X, wogegen das andere Paar Seiten 62 in Projektion parallel zur Achse X der Welle 15 verläuft.

Die erste Sensoreinheit 30 und die zweite Sensoreinheit 40 als Figur 1 sind also gegeneinander um 45 Grad um die z-Achse verdreht orientiert sind.

Auf diese Weise misst die erste Sensoreinheit 30 das von der Welle 15 getragene Magnetfeld mit einem besonders hohem Maß an Empfindlichkeit, wogegen die Empfindlichkeit für die zweite Sensoreinheit 40 als Kompensationssensor für das von der Welle 15 getragene Magnetfeld geringer ist, jedoch die Empfindlichkeit für Störeffekte gegenüber der Empfindlichkeit für Störeffekte der ersten Sensoreinheit 30 unverändert ausgebildet ist.

Dies ermöglicht besonders vorteilhaft die Differenzbildung der durch die ersten und zweiten Sensoreinheiten 30 und 40 ausgegebenen Signale, gegebenenfalls in gewichteter und/oder nachbearbeiteter Form, um so die Störeinflüsse herausfiltern und den durch das beaufschlagende Drehmoment erzeugten Effekt auf das getragene Magnetfeld besonders genau detektieren zu können, und zwar mit dem Ziel, das wirkenden Drehmoment in seinem Wert möglichst genau und störungsfrei zu bestimmen.

Die gegenseitige Orientierung der Sensoreinheiten 30 und 40 soll vorteilhafterweise so ausgebildet sein, dass z.B. die zweite Sensoreinheit 40 nur die Störungen und die erste Sensoreinheit 30 das dem Drehmoment zu Grunde liegende Signal samt Störungen erfasst. Aus einer - ggf. gewichteten - Differenz der Signale kann dann das Drehmoment besonders genau ermittelt werden. Z.B. kann eine gegenseitige Verdrehung von 45° besonders zwischen den Sensoreinheiten 30 und 40 vorteilhaft sein.

Es werden so erfindungsgemäß insbesondere Störungen eliminiert, die im Zusammenhang stehen mit externen Magnetfeldern, z.B. dem Erdfeld und/oder dem Umfeld, der Drehung der Welle, z.B. auf Grund der nicht idealen Geometrie der Welle 15, Vibrationen, Temperaturänderungen und dergleichen.

Figur 2 ist eine Ansicht der Anordnung aus Figur 1 in der Schnittebene II-II aus Figur 1.

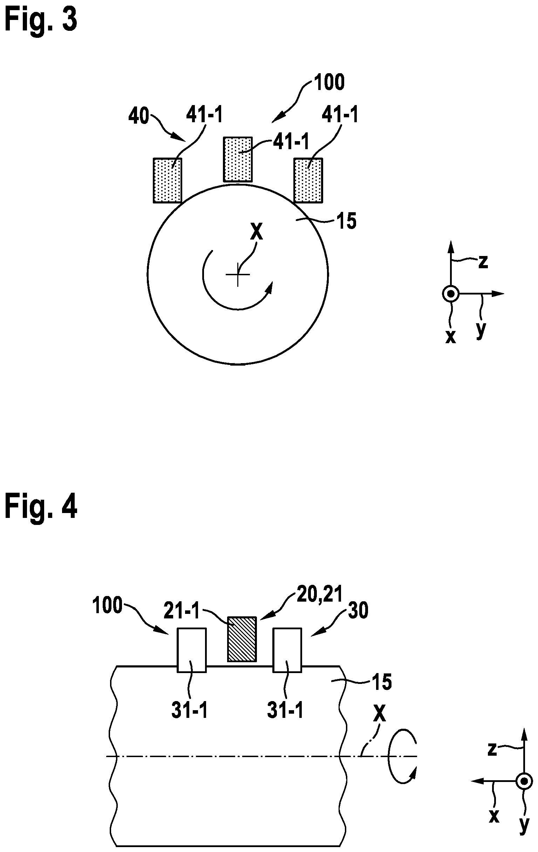

Figur 3 ist eine Ansicht der Anordnung aus Figur 1 mit Blick auf die Schnittebene III-III aus Figur 1.

Figur 4 ist eine Draufsicht auf die Anordnung aus Figur 1 mit Blick auf die Ansichtsebene IV-IV aus Figur 1.

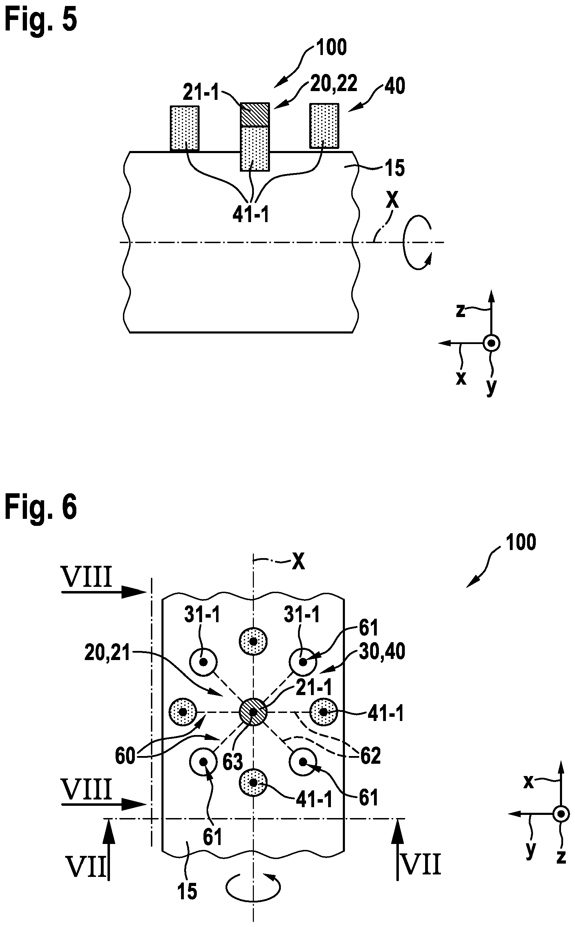

Figur 5 ist eine Draufsicht auf die Anordnung aus Figur 1 mit Blick auf die Ansichtsebene V-V aus Figur 1.

Die Figuren 6 bis 8 zeigen verschiedene Ansichten einer anderen Ausführungsform der erfindungsgemäßen Drehmomenterfassungseinrichtung 100.

Bei dieser Ausführungsform besitzen die erste Sensoreinheit 30 und die zweite Sensoreinheit 40 als solche denselben Aufbau wie die ersten und zweiten Sensoreinheiten 30 bzw. 40 der Ausführungsform der Figuren 1 bis 5. Jedoch sind die erste und zweite Sensoreinheit 30 bzw. 40 miteinander integriert ausgebildet, und zwar in dem Sinne, dass sich ihre Anordnungskreuze 60 überlagern und einen gemeinsamen Kreuzungspunkt 63 bilden, in dem sich ein einziger und gemeinsamer Erreger 21 in Form einer Magnetspule 21-1 für die Erregereinheit 20 befindet.

In einem Winkelabstand von 45 Grad wechseln sich die Empfängerspulen 31-1 der ersten Sensoreinheit 30 und die Empfängerspulen 41-1 der zweiten Sensoreinheit 40 ab. Sie befindet sich aber auf jeweiligen Endpunkten 61 der jeweiligen Anordnungskreuze 60 mit Seiten 62, die gleich lang sind, aufeinander senkrecht stehen und sich überlagernde Kreuzungspunkte 63 besitzen, die in Projektion auf der Achse X der Kurbelwelle 15 liegt.

Figur 6 ist eine Draufsicht auf die Kurbelwelle 15 in analoger Art und Weise wie bei der Darstellung der Figur 1.

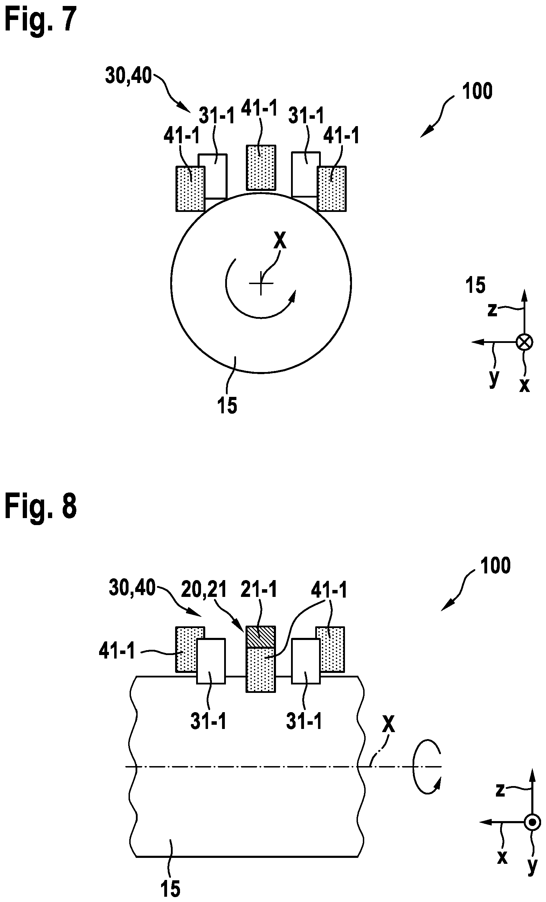

Figur 7 ist eine Schnittansicht der Anordnung aus Figur 6 mit der Schnittebene VII-VII aus Figur 6.

Figur 8 ist eine seitliche Ansicht auf die Anordnung aus Figur 6 mit Blick auf die Ansichtsebene VIII-VIII in Figur 6.

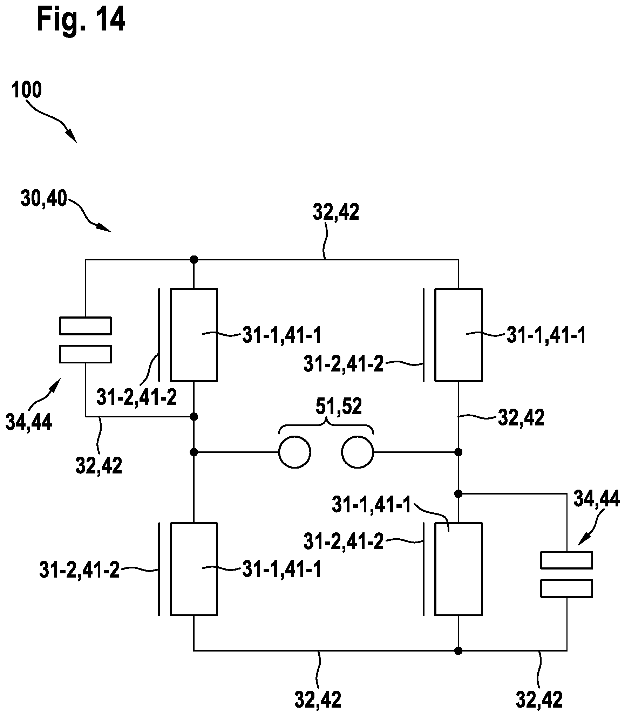

In den Figuren 1 bis 8 sind die jeweiligen Verdrahtungen zum Betrieb, zur Steuerung und Auswertung der einzelnen Spulen 31-1, 41-1, 21-1 beziehungsweise 22-1 nicht explizit dargestellt. Deren Beschreibung erfolgt in Zusammenhang mit den Figuren 14 bis 25.

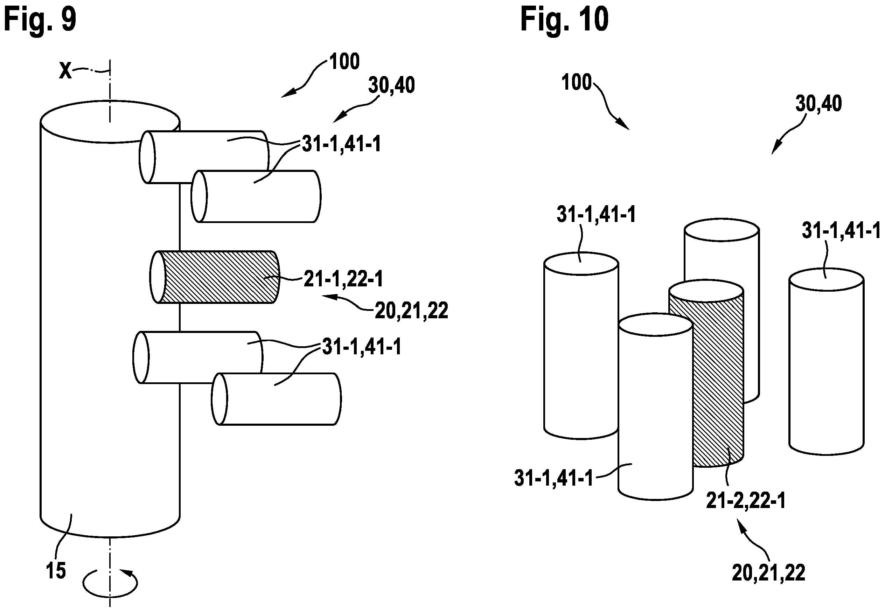

Die Figuren 9 und 10 sind perspektivische Teilansichten der Ausführungsform der erfindungsgemäßen Drehmomenterfassungseinrichtung 100 aus Figur 1 mit Fokus auf die erste Sensoreinheit 30 und ihren Empfängerspulen 31-1 im Verbund mit der Magnetspule 21-1 des Erregers 21 der Erregereinheit 20.

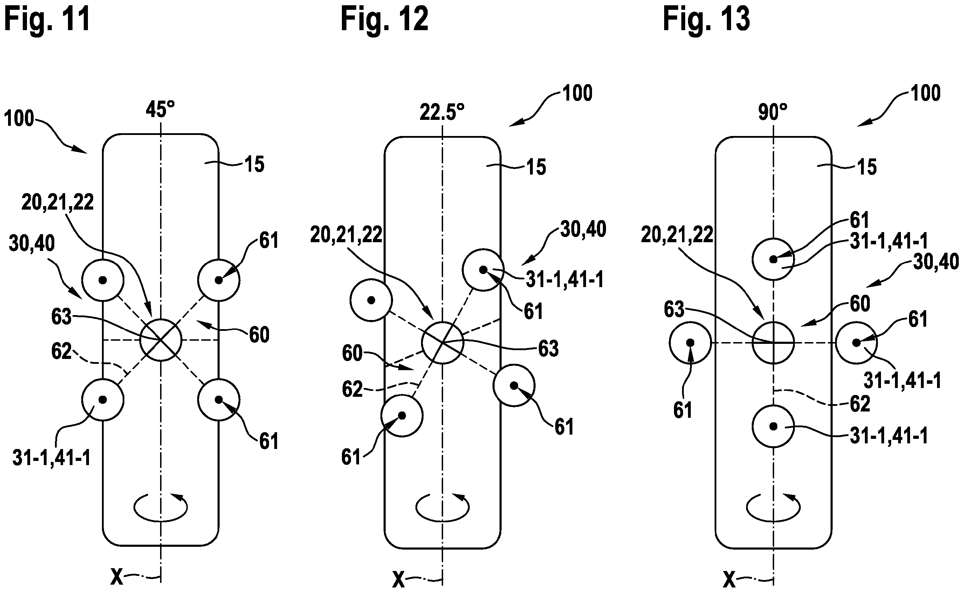

Die Figuren 11 bis 13 zeigen verschiedene Orientierungsmöglichkeiten einer Sensoreinheit 30, 40 mit dem Anordnungskreuz 60 in Bezug auf die Achse X der Kurbelwelle 15, und zwar mit verschiedenen Winkelorientierungen.

Figur 14 zeigt nach Art eines Ersatzschaltbildes den grundsätzlichen Aufbau der ersten und der zweiten Sensoreinheiten 30 und 40 einer Ausführungsform der erfindungsgemäßen Drehmomenterfassungseinrichtung 100. Dabei sind jeweils die Empfangsspulen 31-1 bis 41-1 mit einem jeweiligen Spulenkern 31-2 bzw. 41-2 über Leitungen 32 bzw. 42 nach Art einer Wheatstoneschen Brücke oder einer Induktivitätsresonanzmessbrücke entsprechend verbunden, wobei über Anschlüsse 51 bzw. 52 ein entsprechender elektrischer Abgriff ermöglicht wird.

Einige der Empfangsspulen 31-1, 41-1 sind jeweils mit einem Abstimmkondensator 34, 44 in Parallelschaltung zur jeweiligen Empfangsspule 31-1, 41-1 ausgebildet. Diese Abstimmkondensatoren 34, 44 können als einstellbare oder variable Kondensatoren ausgebildet sein.

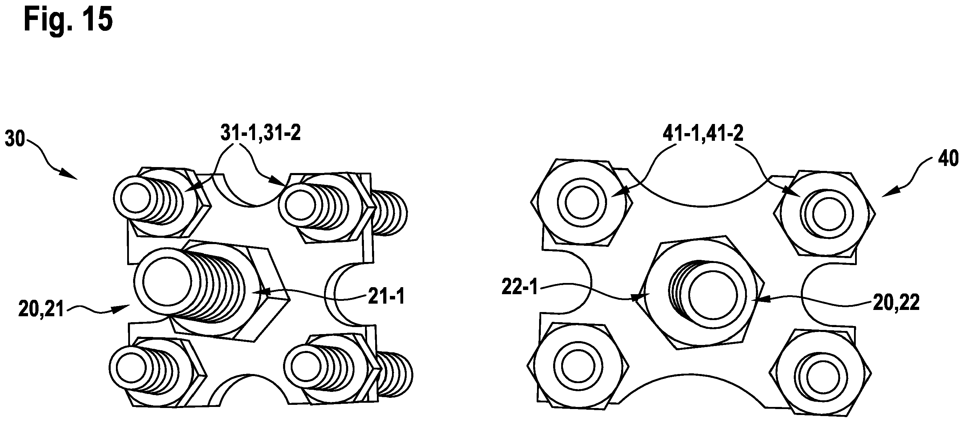

Die Figuren 15 bis 18 zeigen verschiedene perspektivische Ansichten von Ausführungsformen der erfindungsgemäßen Drehmomenterfassungseinrichtung 100, bei welchen die erste Sensoreinheit 30 und die zweite Sensoreinheit 40 voneinander baulich getrennt sind, jeweils auf einem Anordnungskreuz 60 an den Endpunkten 61 davon Empfangsspulen 31-1, 41-1 mit Kern 31-2, 41-2 achsenparallel zueinander und integriert einen Erreger 21 nach Art einer Magnetspule 21-1 mit Kern 21-2 aufweisen.

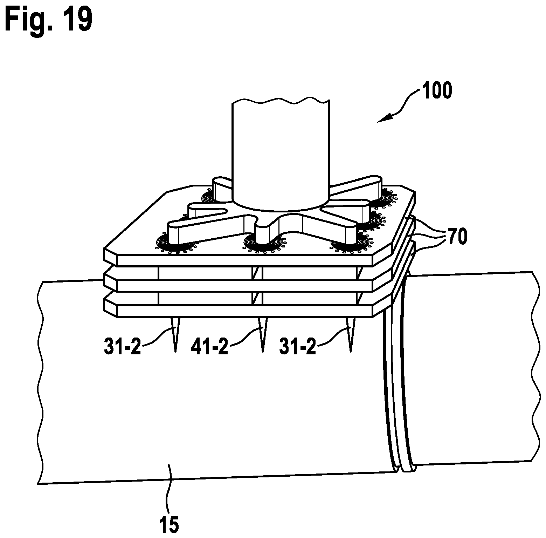

Dem gegenüber zeigen die Figuren 19 bis 22 Ausführungsformen der erfindungsgemäßen Drehmomenterfassungseinrichtung 100, bei welcher die ersten und zweiten Sensoreinheiten 30 und 40 und die Erregereinheit 20 miteinander integriert ausgebildet sind, indem sie nämlich auf einer Anzahl von Leiterplatten oder Platinen 70 gefertigt sind.

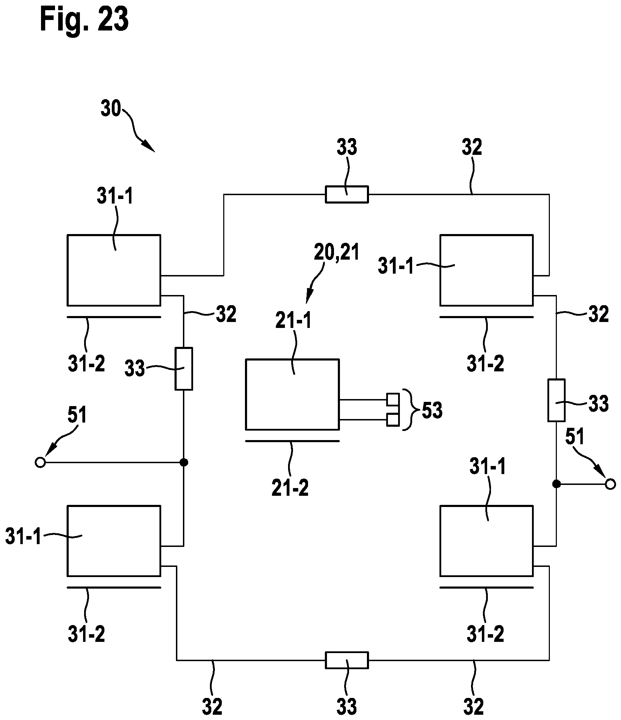

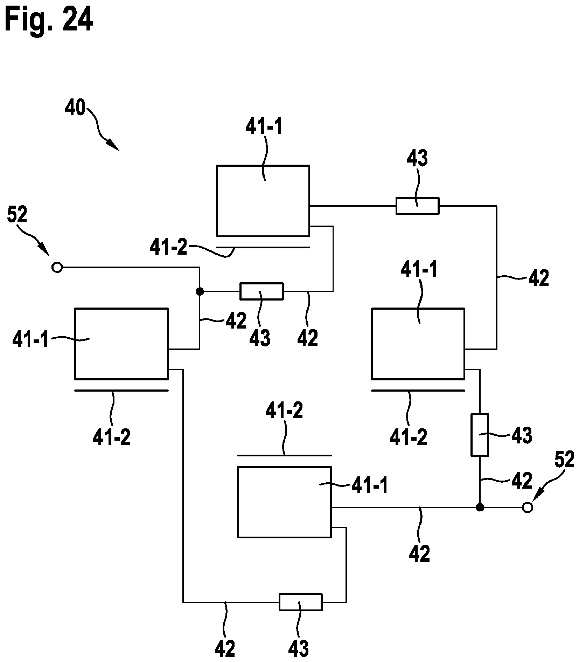

Die Figuren 23 und 24 zeigen eine erste bzw. eine zweite Sensoreinheit 30 und 40 jeweils in Form eines Ersatzschaltbildes. Dabei ist dargestellt, dass die jeweiligen Empfangsspulen 31-1, 41-1 mit Magnetkern 31-2, 41-2 miteinander über Leitungen 32, 42 nach Art einer Wheatstoneschen Brücke oder einer Induktionsresonanzmessbrücke verschaltet sind, wobei zwischen je zwei Empfangsspulen 31-1, 41-1 Abstimmwiderstände 43 in Reihe geschaltet sind. Die Abstimmwiderstände 43 können auch variabel ausgebildet sein. Der Abgriff nach außen erfolgt über Anschlüsse 51, 52.

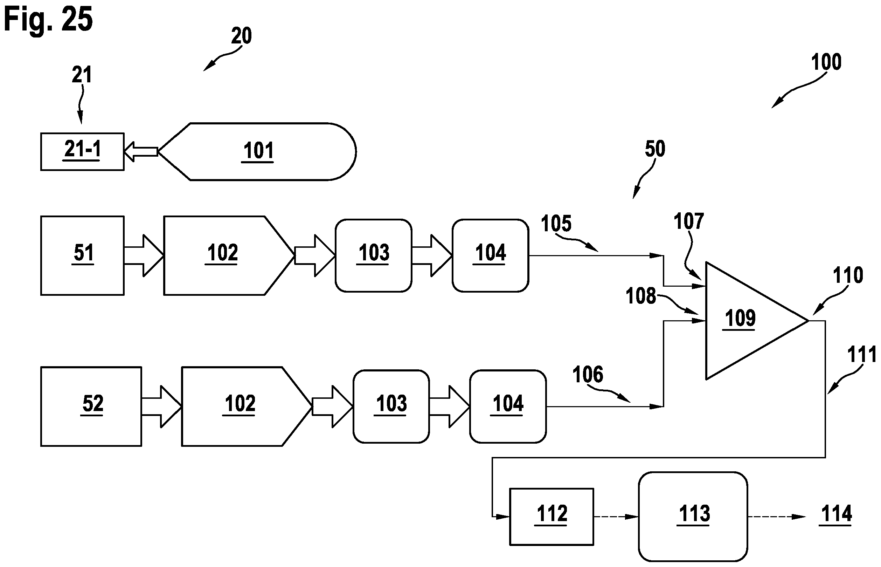

Figur 25 zeigt nach Art eines schematischen Blockdiagramms verschiedene Komponenten und Ablaufelemente, die bei einer Ausführungsform der erfindungsgemäßen Drehmomenterfassungseinrichtung 100 im Zusammenhang mit einer Auswerte- und Steuereinheit 50 zusammenspielen können.

Ausgangspunkt ist ein Oszillator und Generator 101, über welchen eine zeitlich veränderliche Spannung erzeugt wird, zum Beispiel eine sinusförmige Wechselspannung mit einer Frequenz von etwa 500 Hz bis etwa 5 kHz, die dann in die Magnetspule 21-1 des Erregers 21 der Erregereinheit 20 zur Erzeugung eines magnetischen Wechselfeldes eingespeist wird.

Das magnetische Wechselfeld des Erregers 21 wird der Kurbelwelle 15 aufgeprägt und von den ersten und zweiten Sensoreinheiten 30, 40 in der oben bereits beschriebenen Form detektiert. Über die Anschlüsse 51 und 52 werden die von den ersten und zweiten Sensoreinheiten 30, 40 erzeugten Signale bereitgestellt und von der Auswerte- und Steuereinheit 50 empfangen.

Die über die Anschlüsse 51, 52 empfangenen Signale werden zunächst an eine Eingangsverstärkerstufe 102 weitergeleitet und durch verstärkt. Nach dem Durchlaufen eines Bandpassfilters 103 mit einer Zentralfrequenz bei etwa 500 Hz bis etwa 5 kHz und einer RMS-Berechnung 104 werden die dann erhaltenen RMS-Werte 105, 106 der ersten Sensoreinheit 30 als Messsensor und der zweiten Sensoreinheit 40 als Kompensationssensor einer Differenz-, Anpassungs- und/oder Skalierungseinheit bzw. insbesondere den zueinander inversen Eingängen 107 und 108 eines Operationsverstärkers 109 zugeführt. Durch diese Art der Verschaltung wirkt der Operationsverstärker 109 als Differenzverstärker und gibt an seinem Ausgang 110 den analogen RMS-Wert eines von Störungen kompensierten Drehmomentsignals 111 aus. Dieses wird dann einem Analog-Digitalwandler 112 zugeführt. Das Ausgangssignal des Analog-Digitalwandlers 112 wird dann einer digitalen Filterung und Weiterverarbeitung 113 unterworfen. Im Endergebnis wird ein digitaler RMS-Wert des von Störsignalen kompensierten Drehmomentsignals 114 erhalten.

Diese und weitere Merkmale und Eigenschaften der vorliegenden Erfindung werden an Hand der folgenden Darlegungen weiter erläutert:
Ein Aspekt der vorliegenden Erfindung besteht in der Entwicklung eines aktiven Sensors zur Drehmomentmessung an einer stehenden oder sich drehenden Welle. Beispiele für derartige drehende Wellen sind die Kurbelwellen von Fahrrädern, Elektrofahrrädern, eBikes, Pedelecs oder dergleichen.

Mit der Erfindung soll insbesondere eine Verbesserung im Hinblick auf die Störanfälligkeit gegenüber externen Magnetfeldern, z.B. dem Erdfeld und/oder dem Umfeld, der Drehung der Welle, z.B. auf Grund der nicht idealen Geometrie der Welle 15, Vibrationen, Temperaturänderungen und dergleichen erreicht werden.

Eine Kernidee der vorliegenden Erfindung ist das Vorsehen eines zweiten Messelementes, und zwar im Sinne einer zweiten Sensoreinheit 40, die als Kompensationssensor fungiert. Diese kann als Messelement aus mehreren miteinander verschaltenden Empfangsspulen zur Messung und zur Kompensation von Störungen dienen. Es erfolgt eine aktive magnetische Messung bei niedrigen Arbeitsfrequenzen, insbesondere im Bereich von weniger als 5 kHz, vorzugsweise im Bereich von weniger als 3 kHz.

Eine analoge und/oder digitale Signalverarbeitung dient der besseren Signalauflösung und der Steigerung des Signal-zu-Rausch-Verhältnisses. Auch ist dort zusätzlich eine Temperaturkompensation möglich.

Die ersten und zweiten Sensoreinheiten 30 und 40 können in diesem Zusammenhang auch als zwei unabhängige Sensorköpfe, einmal für die Detektion und einmal für die Kompensation, aufgefasst werden.

Im Zusammenhang mit den Figuren wurden Spulenkerne 21-2, 31-2 und 41-2 mit unterschiedlicher Geometrie an der der Welle 15 zugewandten Seite gezeigt. Diese Seite kann als Endfläche planar, konvex, rund, konisch und/oder lokal der Oberflächenform der Welle 15 angepasst sein, also z.B. konkav nach Art eines Abschnitts oder Ausschnitts des Innenmantels eines Kreiszylinders und konform zum Außenmantel der Welle 15.

## Patentansprüche

1. Drehmomenterfassungseinrichtung (100) zur aktiven Erfassung eines auf eine Welle (15) und insbesondere auf eine Kurbelwelle (15) eines mit Muskelkraft und/oder oder mit Motorkraft antreibbaren Fahrzeuges (1) entlang einer Rotationsachse (X) wirkenden Drehmomentes,
mit:
- einer Erregereinheit (20), welche zur Beaufschlagung der Welle (15) mit einem zeitlich veränderlichen Magnetfeld ausgebildet ist, und
- einer ersten Sensoreinheit (30) und einer zweiten Sensoreinheit (40), welche zur Erfassung eines von der Welle (15) getragenen Magnetfeldes ausgebildet sind,
wobei
• die erste und die zweite Sensoreinheit (30, 40) jeweils vier Empfangsspulen (31-1, 41-1) aufweisen und
• die Empfangsspulen (31-1, 41-1) einer Sensoreinheit (30, 40), insbesondere mit Ihren Spulenachsen, an den Endpunkten (61) oder im Bereich der Endpunkte (61) eines Kreuzes (60) angeordnet sind, und
• die erste und die zweite Sensoreinheit (30, 40) - insbesondere bei ansonsten gleichem Aufbau - in Bezug aufeinander verschiedene Orientierungen aufweisen, so dass sie im Betrieb in Bezug auf die Welle (15) und insbesondere in Bezug auf die Rotationsachse (X) voneinander verschieden orientiert sind, und
• die ersten und die zweite Sensoreinheit (30, 40) jeweils einen Kreuzungspunkt (63) aufweisen, wobei die Kreuzungspunkte (63) in Projektion auf einer Achse liegen, die parallel zur Rotationsachse (X) verläuft, und
• die gegenseitige Orientierung der Sensoreinheiten (30, 40) derart ausgebildet ist, dass die erste Sensoreinheit (30) als Messsensor dient und das durch die Erregereinheit (20) erregte und durch die Welle getragene Magnetfeld erfasst und die zweite Sensoreinheit (40) als Kompensationssensor dient, bei dem die Empfindlichkeit für das von der Welle (15) getragene Magnetfeld geringer ist.

2. Drehmomenterfassungseinrichtung (100) nach Anspruch 1, bei welcher die Erregereinheit (20)
- für jede Sensoreinheit (30, 40) jeweils einen eigenen und insbesondere identisch ausgebildeten Erreger (21, 22) oder
- für die Sensoreinheiten (30, 40) einen gemeinsamen Erreger (21) aufweist,
insbesondere jeweils aus oder mit einer Magnetspule (21-1, 22-1) und/oder einem Kern (21-2, 22-2).

3. Drehmomenterfassungseinrichtung (100) nach Anspruch 1 oder 2,
bei welcher die Empfangsspulen der jeweilige Sensoreinheit (30, 40) jeweils einen Kern (31-2, 41-2) aufweisen.

4. Drehmomenterfassungseinrichtung (100) nach einem der vorangehenden Ansprüche,
bei welcher die Empfangsspulen (31-1, 41-1) einer jeweilige Sensoreinheit (30, 40) nach Art einer Brückenschaltung verschaltet sind, insbesondere in Form einer Wheatstoneschen und/oder Induktivitätsresonanzmessbrücke und/oder mit zu einer jeweiligen Empfangsspule (31-1, 41-1) in Reihe geschaltetem Abstimmwiderstand (33, 43) und/oder parallel geschaltetem Abstimmkondensator (34, 44).

5. Drehmomenterfassungseinrichtung (100) nach einem der vorangehenden Ansprüche,
bei welcher die Empfangsspulen (31-1, 41-1) einer Sensoreinheit (30, 40), insbesondere mit Ihren Spulenachsen, an den Endpunkten (61) oder im Bereich der Endpunkte (61) eines Kreuzes (60) mit gleich langen Seiten (62) und/oder mit einem Erreger (21, 22) im Bereich des Kreuzungspunktes (63) angeordnet sind.

6. Drehmomenterfassungseinrichtung (100) nach einem der vorangehenden Ansprüche,
bei welcher die Sensoreinheiten (30, 40)
- räumlich und/oder baulich separiert ausgebildet sind oder
- miteinander integriert, überlappend, verschränkt und/oder in einer gemeinsamen baulichen Einheit ausgebildet sind, insbesondere mit einer konzentrischen Anordnung ihrer Kreuzungspunkte (63) und/oder mit einem gemeinsamen Erreger (21).

7. Drehmomenterfassungseinrichtung (100) nach einem der vorangehenden Ansprüche,
bei welcher eine jeweilige Sensoreinheit (30, 40), insbesondere eine jeweilige Empfangsspule (31-1, 41-1), und/oder ein jeweiliger Erreger (21, 22), insbesondere eine jeweilige Magnetspule (22-1, 22-2), zumindest teilweise als Struktur einer Platine (70) oder Leiterplatte oder einer Mehrzahl davon ausgebildet ist.

8. Drehmomenterfassungseinrichtung (100) nach einem der vorangehenden Ansprüche,
mit einer Auswerte- und Steuereinheit (50), welche eingerichtet ist,
- von den Sensoreinheiten (30, 40) ausgegebene für die erfassten Magnetfelder repräsentative Werte zu empfangen und
- auf der Grundlage der empfangenen Werte den Wert eines auf die Welle (15) wirkendes Drehmomentensignal (114) auszugeben.

9. Drehmomenterfassungseinrichtung (100) nach Anspruch 8, wobei die zweite Sensoreinheit (40 Störsignale erfasst und das Drehmomentensignal (114) ein das so erfasste Störsignal kompensiertes Drehmomentensignal repräsentiert.

10. Drehmomenterfassungseinrichtung (100) nach einem der vorhergehenden Ansprüche, **dadurch gekennzeichnet, dass** ein Oszillator (101) vorgesehen ist, welcher eine zeitlich veränderliche Spannung erzeugt, insbesondere eine sinusförmige Wechselspannung mit einer Frequenz von etwa 500 Hz bis etwa 5 kHz, die in die Magnetspule (21.1) der Erregereinheit (21) zur Erzeugung des zeitlich veränderlichen magnetischen Wechselfelds eingespeist wird.

11. Drehmomenterfassungseinrichtung (100) nach Anspruch 8,
bei welcher die Auswerte- und Steuereinheit (50) eingerichtet ist, eine gewichtete Differenz der von der ersten Sensoreinheit (30) empfangenen Werte zu den von der zweiten Sensoreinheit (40) empfangenen Werte zu Grunde zu legen.

12. Drehmomenterfassungseinrichtung (100) nach einem der vorherigen Ansprüche, **dadurch gekennzeichnet, dass** die erste Sensoreinheit (30) und die zweite Sensoreinheit (40) gegeneinander um 45° Grad verdreht orientiert ist.

13. Mit Muskelkraft und/oder oder mit Motorkraft antreibbares Fahrzeug (1), insbesondere Fahrrad, Elektrofahrrad, eBike, Pedelec oder dergleichen, mit:
- mindestens einem Rad (9-1, 9-2),
- einem Antrieb (80) zum Antreiben des mindestens einen Rades (9-1, 9-2) und
- einer Drehmomenterfassungseinrichtung (100) nach einem der Ansprüche 1 bis 12 zur Erfassung eines auf eine Welle (15) des Antriebes (80) wirkenden Drehmomentes,
bei welchem auf der Grundlage des erfassten Drehmomentes der Antrieb (80) überwachbar und/oder steuerbar ist.

14. Verfahren zum Betrieb einer Drehmomenterfassungseinrichtung (100) nach einem der Ansprüche 1 bis 12,
wobei die Drehmomentenerfassungseinrichtung (100)
- eine Erregereinheit (20), welche zur Beaufschlagung der Welle (15) mit einem zeitlich veränderlichen Magnetfeld ausgebildet ist, und
- einer ersten Sensoreinheit (30) und einer zweiten Sensoreinheit (40), welche zur Erfassung eines von der Welle (15) getragenen Magnetfeldes ausgebildet sind,
aufweist,
wobei
• die erste und die zweite Sensoreinheit (30, 40) jeweils vier Empfangsspulen (31-1, 41-1) aufweisen und
• die erste und die zweite Sensoreinheit (40) - insbesondere bei ansonsten gleichem Aufbau - in Bezug aufeinander verschiedene Orientierungen aufweisen, so dass sie im Betrieb in Bezug auf die Welle (15) und insbesondere in Bezug auf die Rotationsachse (X) voneinander verschieden orientiert sind, und
• die gegenseitige Orientierung der Sensoreinheiten (30, 40) derart ausgebildet ist, dass die erste Sensoreinheit (30) als Messsensor dient und das durch die Erregereinheit (20) erregte und durch die Welle getragene Magnetfeld erfasst und die zweite Sensoreinheit (40) als Kompensationssensor dient, bei dem die Empfindlichkeit für das von der Welle (15) getragene Magnetfeld geringer ist, und
zur Erzeugung eines von Störsignalen kompensierten
Drehmomentensignals (114) der Erregereinheit (20) eine zeitlich veränderliche Spannung, die zur Erzeugung zeitlich veränderlichen magnetischen Wechselfelds eingespeist wird.

15. Verfahren nach Anspruch 14, mit einer Drehmomenterfassungseinrichtung (100) nach einem der Ansprüche 1 bis 12,
wobei
das von Störsignalen kompensierte Drehmomentensignal (111, 114),
welches ein auf die Welle wirkende Drehmoment repräsentiert, auf der Grundlage der empfangenen Werte der Sensoreinheiten (30, 40) zu bestimmt wird.

16. Verfahren nach Anspruch 14 oder 15, **dadurch gekennzeichnet, dass**
• das von Störsignalen kompensierte Drehmomentensignal (111, 114), welches ein auf die Welle wirkende Drehmoment repräsentiert, mittels einer Differenz der Signale der Sensoreinheiten (30, 40) ermittelt wird, insbesondere aus der gewichteten Differenz Signale der Sensoreinheiten (30, 40).

17. Verfahren nach einem der Ansprüche 14 bis 16, **dadurch gekennzeichnet, dass**
• der Erregereinheit (20) eine sinusförmige Wechselspannung mit einer Frequenz von etwa 500 Hz bis etwa 5 kHz eingespeist wird und
• die Signale der ersten und zweiten Sensoreinheiten (30, 40) nach dem Durchlaufen eines Bandpassfilters (103) mit einer Zentralfrequenz bei etwa 500 Hz bis etwa 5 kHz einem Differenzverstärker zugeführt werden, der einen analogen Wert eines von Störungen kompensierten Drehmomentensignals (111) ausgibt.

## Claims

1. Torque-sensing device (100) for actively sensing a torque acting along an axis of rotation (X) on a shaft (15) and in particular on a crankshaft (15) of a vehicle (1) that can be driven by muscle force and/or by motor force, with:
- an exciter unit (20), which is designed for applying a magnetic field that is variable over time to the shaft (15), and
- a first sensor unit (30) and a second sensor unit (40), which are designed for sensing a magnetic field borne by the shaft (15),
wherein
• the first and the second sensor unit (30, 40) respectively have four reception coils (31-1, 41-1) and
• the reception coils (31-1, 41-1) of a sensor unit (30, 40) are arranged, in particular with their coil axes, at the end points (61) or in the region of the end points (61) of a cross (60), and
• the first and the second sensor unit (30, 40) - in particular otherwise of the same construction - have different orientations with respect to one another, so that, during operation, they are oriented differently from one another with respect to the shaft (15) and in particular with respect to the axis of rotation(X), and
• the first and the second sensor unit (30, 40) respectively have a crossing point (63), wherein the crossing points (63) in projection lie on an axis that runs parallel to the axis of rotation (X), and
• the mutual orientation of the sensor units (30, 40) is designed such that the first sensor unit (30) acts as a measuring sensor and senses the magnetic field excited by the exciter unit (20) and borne by the shaft and the second sensor unit (40) acts as a compensation sensor, in which the sensitivity for the magnetic field borne by the shaft (15) is lower.

2. Torque-sensing device (100) according to Claim 1, in which the exciter unit (20) has
- a dedicated, and in particular identically designed, exciter (21, 22) respectively for each sensor (30, 40) or
- a common exciter (21) for the sensor units (30, 40),
in particular respectively comprising or with a solenoid coil (21-1, 22-1) and/or a core (21-2, 22-2) .

3. Torque-sensing device (100) according to Claim 1 or 2,
in which the reception coils of the respective sensor unit (30, 40) respectively have a core (31-2, 41-2).

4. Torque-sensing device (100) according to one of the preceding claims,
in which the reception coils (31-1, 41-1) of a respective sensor unit (30, 40) are interconnected as a bridge circuit, in particular in the form of a Wheatstone bridge and/or an inductance resonance measuring bridge, and/or with a tuning resistor (33, 43) connected in series in relation to a respective reception coil (31-1, 41-1) and/or a tuning capacitor (34, 44) connected in parallel.

5. Torque-sensing device (100) according to one of the preceding claims,
in which the reception coils (31-1, 41-1) of a sensor unit (30, 40) are arranged, in particular with their coil axes, at the end points (61) or in the region of the end points (61) of a cross (60) with sides (62) of the same length and/or with an exciter (21, 22) in the region of the crossing point (63).

6. Torque-sensing device (100) according to one of the preceding claims,
in which the sensor units (30, 40)
- are designed as spatially and/or structurally separate or
- are integrated with one another, overlapping, crossed over and/or in a common structural unit, in particular with a concentric arrangement of their crossing points (63) and/or with a common exciter (21).

7. Torque-sensing device (100) according to one of the preceding claims,
in which a respective sensor unit (30, 40), in particular a respective reception coil (31-1, 41-1), and/or a respective exciter (21, 22), in particular a respective solenoid coil (22-1, 22-2), is designed at least partially as a structure of a circuit board (70) or printed circuit board or a plurality thereof.

8. Torque-sensing device (100) according to one of the preceding claims,
with an evaluation and control unit (50), which is set up
- to receive representative values for the sensed magnetic fields output by the sensor units (30, 40) and
- on the basis of the received values, to output the value of a torque signal (114) acting on the shaft (15) .

9. Torque-sensing device (100) according to Claim 8, wherein the second sensor unit (40) senses interference signals and the torque signal (114) represents a torque signal that compensates for the interference signal thus sensed.

10. Torque-sensing device (100) according to one of the preceding claims, **characterized in that** an oscillator (101) is provided, which generates a voltage that is variable over time, in particular a sinusoidal alternating voltage with a frequency of approximately 500 Hz to approximately 5 kHz, which is fed into the solenoid coil (21.1) of the exciter unit (21) for generating the alternating magnetic field that is variable over time.

11. Torque-sensing device (100) according to Claim 8, in which the evaluation and control unit (50) is set up to use a weighted difference between the values received from the first sensor unit (30) and the values received from the second unit (40) as a basis.

12. Torque-sensing device (100) according to one of the preceding claims, **characterized in that** the first sensor unit (30) and the second sensor unit (40) are oriented such that they are turned with respect to one another by 45° degrees.

13. Vehicle that can be driven by muscle force and/or by motor force, in particular a bicycle, an electric bicycle, an e-bike, or a pedelec, with:
- at least one wheel (9-1, 9-2);
- a drive (80) for driving the at least one wheel (9-1, 9-2); and
- a torque-sensing device (100) according to one of Claims 1 to 12 for sensing a torque acting on a shaft (15) of the drive (80),
in which the drive (80) can be monitored and/or can be controlled on the basis of the sensed torque.

14. Method for operating a torque-sensing device (100) according to one of Claims 1 to 12,
wherein the torque-sensing device (100) has
- an exciter unit (20), which is designed for applying a magnetic field that varies over time to the shaft (15), and
- a first sensor unit (30) and a second sensor unit (40), which are designed for sensing a magnetic field borne by the shaft (15),
wherein
• the first and the second sensor unit (30, 40) respectively have four reception coils (31-1, 41-1) and
• the first and the second sensor unit (40) - in particular otherwise of the same construction - have different orientations with respect to one another, so that, during operation, they are oriented differently from one another with respect to the shaft (15) and in particular with respect to the axis of rotation(X),
• the mutual orientation of the sensor units (30, 40) is designed such that the first sensor unit (30) acts as a measuring sensor and senses the magnetic field excited by the exciter unit (20) and borne by the shaft and the second sensor unit (40) acts as a compensation sensor, in which the sensitivity for the magnetic field borne by the shaft (15) is lower, and
for generating a torque signal (114) compensated for interference signals, a voltage that is variable over time, which for generating an alternating magnetic field that is variable over time, is fed into the exciter unit (20).

15. Method according to Claim 14, with a torque-sensing device (100) according to one of Claims 1 to 12,
wherein
the torque signal (111, 114) compensated for interference signals, which represents a torque acting on the shaft, is determined on the basis of the received values of the sensor units (30, 40).

16. Method according to Claim 14 or 15, **characterized in that**
• the torque signal (111, 114) compensated for interference signals, which represents a torque acting on the shaft, is determined by means of a difference between the signals of the sensor units (30, 40), in particular from the weighted difference between signals of the sensor units (30, 40) .

17. Method according to one of Claims 14 to 16, **characterized in that**
• a sinusoidal alternating voltage with a frequency of approximately 500 Hz to approximately 5 kHz is fed into the exciter unit (20) and
• the signals of the first and second sensor units (30, 40), after running through a bandpass filter (103) with a central frequency at approximately 500 Hz to approximately 5 kHz, are supplied to a differential amplifier, which outputs an analogue value of a torque signal (111) compensated for interferences.

## Revendications

1. Dispositif de détection de couple (100) destiné à détecter de manière active un couple agissant sur un arbre (15) et en particulier sur un vilebrequin (15) d'un véhicule (1), pouvant être entraîné par la force musculaire et/ou par la force d'un moteur, le long d'un axe de rotation (X), ledit dispositif comprenant :
- une unité d'excitation (20) qui est conçue pour soumettre l'arbre (15) à un champ magnétique variant dans le temps, et
- une première unité formant capteur (30) et une deuxième unité formant capteur (40) qui sont conçues pour détecter un champ magnétique porté par l'arbre (15),
• les première et deuxième unités formant capteurs (30, 40) comportant chacune quatre bobines de réception (31-1, 41-1) et
• les bobines de réception (31-1, 41-1) d'une unité formant capteur (30, 40) étant disposées, notamment au niveau de leurs axes de bobine, aux points d'extrémité (61) ou dans la région des points d'extrémité (61) d'une croix (60), et
• les première et deuxième unités formant capteurs (30, 40) - en particulier pour une structure par ailleurs identique - présentant l'une par rapport à l'autre des orientations différentes de façon à être orientées différemment en fonctionnement par rapport à l'arbre (15) et en particulier par rapport à l'axe de rotation (X), et
• les première et deuxième unités formant capteurs (30, 40) comportant chacune un point de croisement (63), les points de croisement (63) étant situés en projection sur un axe parallèle à l'axe de rotation (X), et
• l'orientation mutuelle des unités formant capteurs (30, 40) étant conçue de telle sorte que la première unité formant capteur (30) serve de capteur de mesure et détecte le champ magnétique excité par l'unité d'excitation (20) et porté par l'arbre, et que la deuxième unité formant capteur (40) serve de capteur de compensation pour lequel la sensibilité au champ magnétique porté par l'arbre (15) est plus faible.

2. Dispositif de détection de couple (100) selon la revendication 1, dans lequel l'unité d'excitation (20) comporte
- pour chaque unité formant capteur (30, 40) un excitateur (21, 22) distinct et en particulier de conception identique ou
- un excitateur (21) commun aux unités formant capteurs (30, 40),
en particulier formé de, ou comprenant, une bobine magnétique (21-1, 22-1) et/ou un noyau (21-2,22-2).

3. Dispositif de détection de couple (100) selon la revendication 1 ou 2, dans lequel les bobines de réception de l'unité formant capteur respective (30, 40) comportent chacune un noyau (31-2, 41-2).

4. Dispositif de détection de couple (100) selon l'une des revendications précédentes, dans lequel les bobines de réception (31-1, 41-1) d'une unité formant capteur respective (30, 40) sont reliées à la manière d'un circuit en pont, notamment sous la forme d'un pont de Wheatstone et/ou d'un pont d'inductances de mesure de résonance et/ou comprenant une résistance d'accord (33, 43) montée en série et/ou un condensateur d'accord (34, 44) monté en parallèle à une bobine de réception respective (31-1, 41-1).

5. Dispositif de détection de couple (100) selon l'une des revendications précédentes, dans lequel les bobines de réception (31-1, 41-1) d'une unité formant capteur (30, 40) sont disposées, notamment au niveau de leurs axes de bobine, aux points d'extrémité (61) ou dans la région des points d'extrémité (61) d'une croix (60) ayant des côtés d'égale longueur (62) et/ou comportant un excitateur (21, 22) dans la région du point de croisement (63).

6. Dispositif de détection de couple (100) selon l'une des revendications précédentes, dans lequel les unités formant capteurs (30, 40)
- sont conçues de manière séparée spatialement et/ou structurellement ou
- sont intégrées, superposées, entrecroisées l'une avec l'autre et/ou formées dans une unité structurelle commune, notamment avec une disposition concentrique de leurs points de croisement (63) et/ou avec un excitateur commun (21).

7. Dispositif de détection de couple (100) selon l'une des revendications précédentes, dans lequel une unité formant capteur respective (30, 40), en particulier une bobine de réception respective (31-1, 41-1), et/ou un excitateur respectif (21, 22), en particulier une bobine magnétique respective (22-1, 22-2), est conçue au moins partiellement sous la forme d'une structure d'une carte de circuit (70) ou d'une plaquette imprimée ou d'une pluralité de celles-ci.

8. Dispositif de détection de couple (100) selon l'une des revendications précédentes, comprenant une unité d'évaluation et de commande (50), qui est adaptée
- pour recevoir des valeurs délivrées par les unités formant capteurs (30, 40) et représentatives des champs magnétiques détectés, et
- pour délivrer, sur la base des valeurs reçues, la valeur d'un signal de couple (114) agissant sur l'arbre (15) .

9. Dispositif de détection de couple (100) selon la revendication 8, la deuxième unité formant capteur (40) détectant des signaux d'interférence et le signal de couple (114) représentant un signal de couple compensé vis-à-vis du signal d'interférence ainsi détecté.

10. Dispositif de détection de couple (100) selon l'une des revendications précédentes, **caractérisé en ce qu'**il est prévu un oscillateur (101) qui génère une tension variable dans le temps, en particulier une tension alternative sinusoïdale d'une fréquence d'environ 500 Hz à environ 5 kHz, qui est injectée dans la bobine magnétique (21.1) de l'unité d'excitation (21) pour générer le champ magnétique alternatif variant dans le temps.

11. Dispositif de détection de couple (100) selon la revendication 8, dans lequel l'unité d'évaluation et de commande (50) est adaptée pour générer une différence pondérée entre les valeurs reçues de la première unité formant capteur (30) et les valeurs reçues de la deuxième unité formant capteur (40).

12. Dispositif de détection de couple (100) selon l'une des revendications précédentes, **caractérisé en ce que** la première unité formant capteur (30) et la deuxième unité formant capteur (40) sont orientées en étant tournées de 45° degrés l'une par rapport à l'autre.

13. Véhicule (1) pouvant être entraîné par la force musculaire et/ou par la force d'un moteur, en particulier un vélo, un vélo électrique, un eBike, un Pedelec ou similaire, le véhicule comprenant :
- au moins une roue (9-1, 9-2),
- un entraînement (80) destiné à entraîner l'au moins une roue (9-1, 9-2) et
- un dispositif de détection de couple (100) selon l'une des revendications 1 à 12 destiné à détecter un couple agissant sur un arbre (15) de l'entraînement (80),
dans lequel l'entraînement (80) peut être surveillé et/ou commandé sur la base du couple détecté.

14. Procédé de fonctionnement d'un dispositif de détection de couple (100) selon l'une des revendications 1 à 12,
le dispositif de détection de couple (100) comportant
- une unité d'excitation (20) qui est conçue pour soumettre l'arbre (15) à un champ magnétique variant dans le temps, et
- une première unité formant capteur (30) et une deuxième unité formant capteur (40) qui sont conçues pour détecter un champ magnétique porté par l'arbre (15),
• les première et deuxième unités formant capteurs (30, 40) comportant chacune quatre bobines de réception (31-1, 41-1) et
• les première et deuxième unités formant capteurs (40) - en particulier pour une structure par ailleurs identique - présentant l'une par rapport à l'autre des orientations différentes de façon à être orientées différemment en fonctionnement par rapport à l'arbre (15) et en particulier par rapport à l'axe de rotation (X), et
et
• l'orientation mutuelle des unités formant capteurs (30, 40) étant conçue de telle sorte que la première unité formant capteur (30) serve de capteur de mesure et détecte le champ magnétique excité par l'unité d'excitation (20) et porté par l'arbre, et que la deuxième unité formant capteur (40) serve de capteur de compensation, pour lequel la sensibilité au champ magnétique porté par l'arbre (15) est plus faible, et pour générer un signal de couple (114) compensé par des signaux parasites, une tension variant dans le temps, qui pour générer un champ alternatif magnétique variant dans le temps, est injectée dans l'unité d'excitation (20) .

15. Procédé selon la revendication 14, comprenant un dispositif de détection de couple (100) selon l'une des revendications 1 à 12,
le signal de couple (111, 114), compensé vis-à-vis des signaux d'interférence et représentant un couple agissant sur l'arbre, étant déterminé sur la base des valeurs reçues des unités formant capteurs (30, 40).

16. Procédé selon la revendication 14 ou 15, **caractérisé en ce que**
• le signal de couple (111, 114), compensé par des signaux parasites et représentant un couple agissant sur l'arbre, est déterminé au moyen d'une différence entre les signaux des unités formant capteurs (30, 40), notamment à partir de la différence pondérée de signaux des unités formant capteurs (30, 40).

17. Procédé selon l'une des revendications 14 à 16, **caractérisé en ce que**
• une tension alternative sinusoïdale d'une fréquence d'environ 500 Hz à environ 5 kHz est injectée dans l'unité d'excitation (20) et
• les signaux des première et deuxième unités formant capteurs (30, 40), après avoir traversé un filtre passe-bande (103) d'une fréquence centrale d'environ 500 Hz à environ 5 kHz, sont amenés à un amplificateur différentiel qui délivre une valeur analogique d'un signal de couple (111) compensé vis-à-vis d'interférences.
